# EUROPEAN PATENT APPLICATION

(11) **EP 2 224 331 A1**
(43) Date of publication of application: **01.09.2010**
(21) Application number: 09153877.7
(22) Date of filing: 27.02.2009
(51) Int. Cl.: G06F 9/44, H04M 1/72, H04W 4/02

(54) **Mobile wireless communications system providing device icon notification indicia framing and related methods**

(71) Applicant: RESEARCH IN MOTION LIMITED, Waterloo, Ontario N2L 3W8 (CA)
(72) Inventor: Bosan, Sorel, Waterloo, Ontario N2L 3L3 (CA); Zima, Janice, Waterloo, Ontario N2L 3L3 (CA); Balsillie, James L., Waterloo, Ontario N2L 3W8 (CA)
(74) Representative: Roberts, Gwilym Vaughan

(57) **Abstract**

A wireless communications system may include a notification server and at least one mobile wireless communications device. The at least one mobile wireless communications device may include a display, a wireless transceiver, a user input device, and a processor. The processor may be for displaying a plurality of selectable icons on the display, and retrieving notification data from the notification server via the wireless transceiver. The processor may also be for indicating a selected one of the icons on the display based upon the user input device by displaying notification indicia framing around the selected icon based upon the notification data from the notification server.

## Description

### Technical Field

The present disclosure relates to the field of communications systems, and, more particularly, to mobile wireless communications systems and related methods.

### Background

Mobile communications systems continue to grow in popularity and have become an integral part of both personal and business communications. Mobile telephones allow users to place and receive voice calls most anywhere they travel. Moreover, as mobile telephone technology has increased, so too has the functionality of mobile devices and the different types of devices available to users. For example, many mobile devices now incorporate personal digital assistant (PDA) features such as calendars, address books, task lists, etc. Moreover, such multi-function devices may also allow users to wirelessly send and receive electronic mail (email) messages and access the Internet via a mobile network and/or a wireless local area network (WLAN), for example.

As a result, users continue to spend more time using their mobile devices during the course of a day performing information searches, reading emails, etc., as opposed to early cellular phones that were used only for phones calls. This has resulted in a significant interest from the advertising community in targeting advertisements to mobile devices.

### Brief Description of the Drawings

FIG. 1 is a schematic block diagram of a wireless communications system in accordance with one exemplary embodiment providing icon advertising features.

FIGS. 2-5 are views of the display of the mobile wireless communications device of FIG. 1 illustrating advertising indicia framing features.

FIGS. 6 and 7 are flow diagrams illustrating icon advertising method aspects in accordance with exemplary embodiments.

FIG. 8 is a schematic block diagram illustrating exemplary components of a mobile wireless communications device that may be used in accordance with the system of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

One technical problem addressed by the exemplary embodiments set forth herein is how to include supplemental notification information, such as advertising information, along with menus or application icons on a relatively small mobile device display, yet without having to increase the physical dimensions of the display to accommodate both the menus/icons and the supplemental notification information.

Generally speaking, this and other technical problems are addressed by a wireless communications system which may include a notification (e.g., an advertising) server and at least one mobile wireless communications device. The at least one mobile wireless communications device may include a display, a wireless transceiver, a user input device, and a processor. More particularly, the processor may be for rendering or displaying a plurality of selectable icons on the display, and retrieving notification data (e.g., advertising data) from the notification server via the wireless transceiver. The processor may also be for indicating a selected one of the icons on the display based upon the user input device by displaying notification indicia framing around the selected icon based upon the notification data from the notification server.

In one exemplary embodiment, the notification indicia framing may surround the selected icon. By way of example, the notification indicia framing may include notification text, or may include a corporate logo. Furthermore, the processor is configured to change a position of the displayed notification indicia framing from surrounding one selected icons to surrounding an adjacent selected icon based on user input from the user input device. Moreover, the displayed notification indicia framing may be different for different icons in some embodiments.

in addition, the displayed notification indicia framing may be selected based upon a geographic location of the mobile wireless communications device. Further, the processor may also be for displaying at least one additional icon on the display for which notification indicia framing is not displayed upon selection. Additionally, the notification server may provide the notification data based upon bidding (e.g., advertiser bidding). By way of example, the wireless transceiver may be a cellular transceiver.

A mobile wireless communications device, such as the one described briefly above, is also provided. In addition, a mobile wireless communications method aspect is for use with a notification server and at least one mobile wireless communications device including a display, a wireless transceiver, and a user input device. The method may include rendering a plurality of selectable icons on the display, and retrieving notification data from the notification server via the wireless transceiver. The method may further include indicating a selected one of the icons on the display based upon the user input device by displaying notification indicia framing around the selected icon based upon the notification data from the notification server.

A related computer-readable medium is also provided. The computer-readable medium may have computer-executable instructions for causing a mobile wireless communications device including a display, a wireless transceiver, and a user input device to perform steps including rendering a plurality of selectable icons on the display, retrieving notification data from a notification server via a wireless transceiver, and indicating a selected one of the icons on the display based upon the user input device by displaying notification indicia framing around the selected icon based upon the notification data from the notification server.

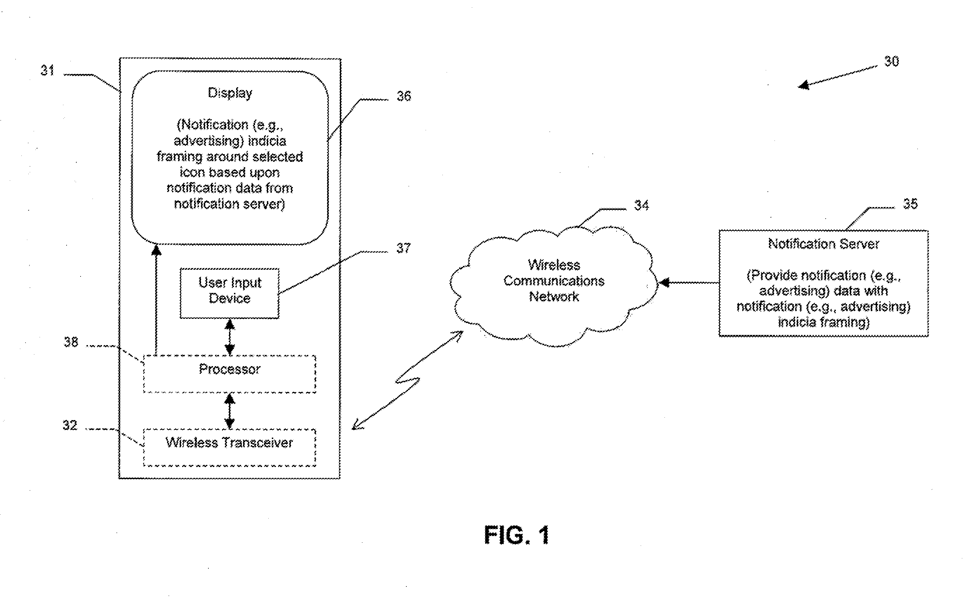

Referring initially to FIG. 1, a communications system **30** and associated communications method aspects are first described. The system **30** illustratively includes one or more mobile wireless communications devices **31** (MMCDs), or mobile device for short, which includes a wireless transceiver **32** and associated antenna(s) (not shown), which may be an internal antenna(s), external antenna(s), or both. Moreover, the system **30** further illustratively includes a wireless communications network **34,** and notification server, such as an advertising server **35,** that communicates with the mobile device **31** via the wireless communications network. In some embodiments, the advertising server **35** may communicate with the wireless communications network **34** via a wide area network, such as the Internet, for example (not shown). It should be noted that while the embodiments discussed herein are provided with reference to advertising notifications, notifications other than advertisements (e.g., news information, etc.) may also be used in other embodiments.

By way of example, the mobile device **31** and wireless communications network **34** may operate in accordance with a cellular, wireless LAN (e.g., 802.11x, Bluetooth, etc.), WiMAX, or satellite, etc., communications format, as will be appreciated by those skilled in the art. In some embodiments, more than one such wireless communications format may be used in the same device (e.g., cellular, wireless LAN, and Bluetooth). Various types of Mobile devices 31 may be used, such as mobile phones, PDAs, laptop computers, wireless-enabled cameras, and wireless-enabled media players, etc., for example.

The mobile devices **31** further illustratively includes a display **36,** at least one user input device **37,** and a processor **38.** By way of example, the display **36** may be a liquid crystal display (LCD), although other suitable display types may also be used, as will be appreciated by those skilled in the art. Various types of user input devices **37** may be used, such as a track ball, thumb wheel, directional (up, down, left, right, etc.) buttons, and a sensory contact layer for a touch screen display, etc., as will also be appreciated by those skilled in the art. In addition, the processor **38** may be implemented using a combination of hardware and software components, including a microprocessor, memory, etc., for example.

In some embodiments, the system **30** may advantageously be implemented in accordance with the Open Mobile Alliance (OMA) Mobile Advertising Requirements (see OMA-RD-Mobile-Advertising-V1_0-2C080805-C, 2008 Open Mobile Alliance Ltd., Candidate Version 1.0, available at http://www.openmobilealliance.org/Techriioal/release_progr am/mobad_v1_0.aspx). In accordance with the OMA MobAd specification, the notification server **35** may be implemented as an advertiser server or Ad Network server, content service provider, etc., that will provide notifications with notification indicia framing to the device **31,** as will be appreciated by those skilled in the art.

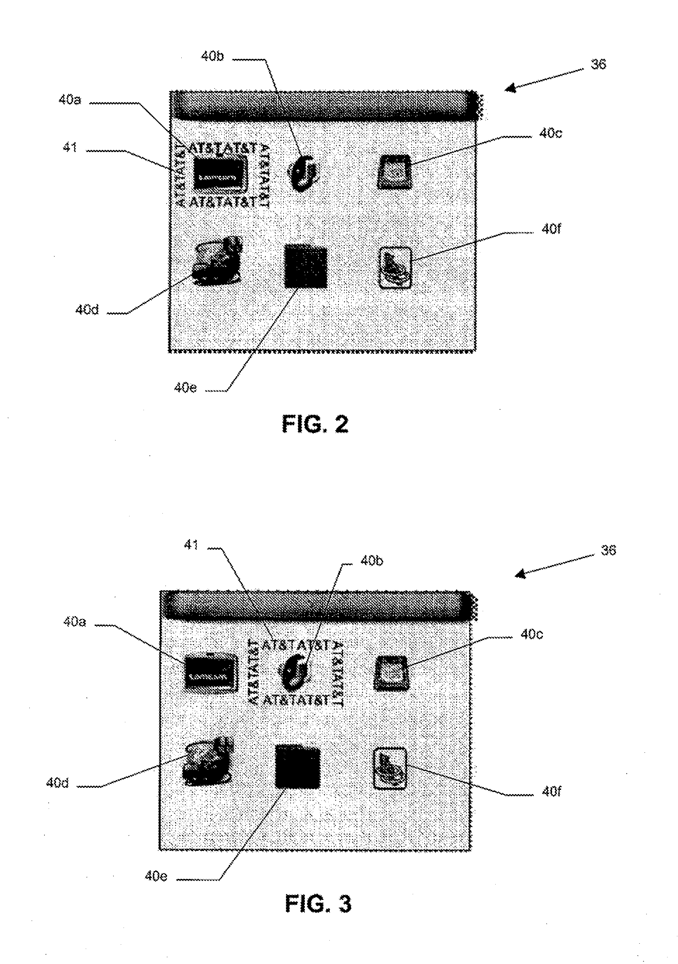

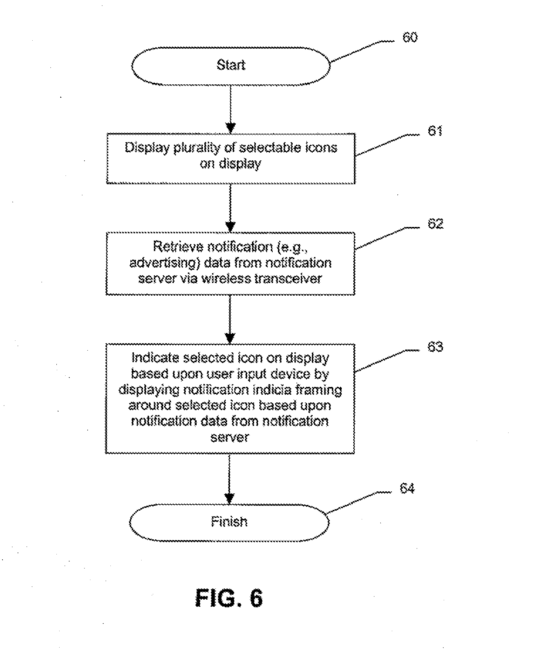

Referring now additionally to FIGS. 2-7, beginning at Block **60,** the processor **38** is for displaying a plurality of selectable icons **40a** through **40f,** individually or collectively referred to as **40,** on the display **36,** at Block **61**. Moreover, the processor **38** also retrieves advertising data from the advertising server **35** via the wireless transceiver **32**, at Block **62.** Based upon the retrieved advertising data, the processor **38** may advantageously indicate a selected one of the icons **40** on the display **36** based upon the user input device **37** by displaying advertising indicia framing **41** around the selected icon, at Block **63**, thus concluding the method illustrated in FIG. 6 (Block **64).**

By way of example, the advertising data may include text, corporate logos, or images, etc., from one or more advertisers (e.g., corporations), along with optional information such as how this information is to be included in the advertising indicia framing **41,** the conditions under which the framing is to be displayed (e.g., for which icons), etc. In the illustrated example of FIG. 2, the framing includes a corporate logo ("AT&T") which is displayed in repeated fashion around the icon **40a** when this icon is selected by the user input device **37.** By selection, it is meant that the user input device **37** points to or otherwise "hovers over" or designates a given icon, which does not require "clicking" or otherwise activating, opening or copying the icon and its associated software application (although such operations may also be included in the selection process in some embodiments).

In the exemplary embodiment, the advertising indicia framing **41** illustratively surrounds the selected icon **40a** by displaying the repeating logo on four sides of the icon in a rectangular shape. On the left and right sides of the rectangle, the text is illustratively rotated so that the bottom of the letters face inward toward the icon. The text is not rotated on the top or bottom sides so that it is presented in a normal fashion to the user (i.e., the bottom of the letters face the bottom of the display **36**). However, different orientations of the framing text may be used in different embodiments.

By way of example, one alternative is that the letters on the sides of the rectangle may be in their normal orientation (i.e., not rotated), but printed vertically from top-to-bottom as opposed to horizontally in left-to-right fashion (i.e., in vertical "crossword puzzle" orientation). It should also be noted that different framing shapes besides rectangles or squares may also be used, such as circle or oval framing, etc., as will be appreciated by those skilled in the art. Moreover, the framing need not completely surround the selected icon in all embodiments. It should also be noted that other components may be included within the framing **41,** such as lines, shadows (such as a shadow box), colors, etc., to further accentuate the given icon **40** and the framing. Moreover, the framing **41** could also flash, change color, be animated (e.g., moving around the icon), etc.

The advertising indicia framing **41** advantageously addresses a problem that advertisers experience in attempting to deliver messages to users of mobile device in an unobtrusive way, yet also in a manner that will attract a user's attention. These two concepts are typically at odds with many current forms of advertising. For example, banner ads in a browser window may take up significant display area, which can be particularly undesirable on relatively small mobile device screens (e.g., PDA screens, smart phone screens, etc.). Moreover, users may learn to avoid paying attention to banner ads since they are typically located at a position on the screen that the user is not focusing on (e.g., the banner is at the top of the screen, whereas the user is focused on the center of the screen).

As will be appreciated by those skilled in the art, the advertising indicia framing **41** advantageously is presented relatively closely around the given icon **40** that the user seeks to click or activate. Thus, the advertising indicia framing **41** around the given icon **40** acts as a target or guide that visually focuses the user's eyes on the given icon, while at the same time also causing the user to notice the advertising text or image included within the framing.

This effect can become even more acute in embodiments where the processor **38** advantageously causes the advertising indicia framing **41** to move between selected icons. For example, from FIG. 2 to FIG. 3 it can be seen that the user has moved the advertising indicia framing **41** from the icon **40a** to the icon **40b** using the user input device **37,** so that the framing is now around the icon **40b.** Since the user's vision will typically track the movement of the advertising indicia framing **41** to the next desired icon **40b,** this also causes the user to notice and focus on the advertising indicia included within the framing **41** as it is moved to be around the next desired icon.

The advertising indicia included within the advertising indicia framing **41** advantageously needs little or no additional display space than is already consumed by the icons **40** and the padding that would already be included between the icons, which is beneficial in many applications, but particularly so where the mobile device display **36** is relatively small (e.g., as on a cellular phone, FDA, etc.). Yet, the advertisements are also advantageously displayed in a location where the user is forced to visually focus or pay attention, namely around the icon **40** the user desires to select.

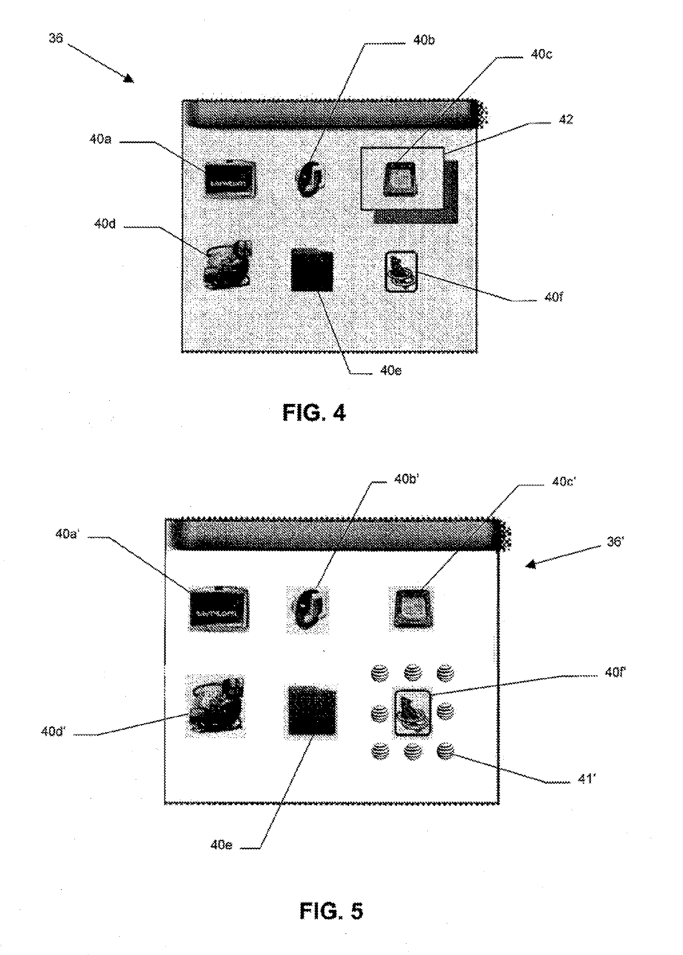

It should be noted that in some embodiments the processor **38** may display one or more icons **40** for which advertising indicia framing is not displayed upon selection. That is, not all of the icons **40** need be highlighted with the advertising indicia framing **41** in all embodiments. As seen in FIG. 4, when the user selects the icon **40c,** a plain rectangular shadow-box frame **42** is displayed to highlight this selected icon. Other types and shapes of non-indicia highlighting or frames may be used in different embodiments. Accordingly, some icons may advantageously be "sponsored" by advertisers, while others are not. Another option is that advertisers choose to sponsor a certain number of icon highlights or moves of the advertising indicia framing **41,** such that when a last move is completed subsequent framing no longer includes advertising indicia, as with the plain framing **42.**

Moreover, in some embodiments the displayed advertising indicia framing **41'** may be different for different icons. Referring to the example of FIG. 5, here the advertising indicia framing **41'** is around the icon **40f',** but instead of the AT&T company name it includes a repeating image, namely the AT&T spherical logo image. In accordance with one approach, respective advertising indicia may be assigned to a given icon **40** so that that particular advertising indicia is displayed whenever the framing **41** highlights that icon (i.e., so long as the sponsor continues to pay for the advertisement, for example). Another approach is that the advertising indicia changes each time the framing **41.'** is moved, such as based upon the highest bidder or in a certain order (e.g., scroll through a list of advertising indicia and then repeat). Other suitable approaches may also be used, as will be appreciated by those skilled in the art.

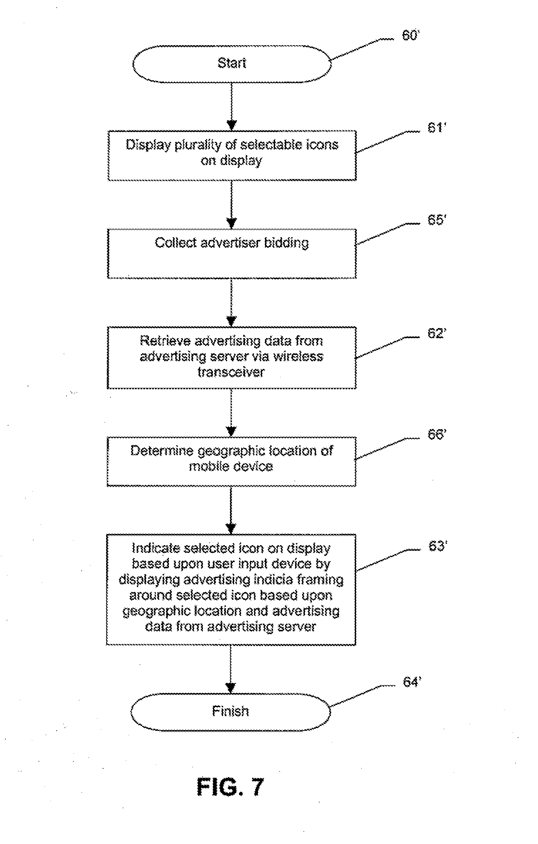

Referring now to FIG. 7, additional aspects are now described. As noted above, the advertising server **35** may provide the advertising data based upon advertiser bidding, which is collected at Block **65'.** However, placement of advertising indicia in the framing **40** need not be bid-based in all embodiments. That is, fixed-fee rates may be charged, and an advertiser may agree to pay for a certain number of instances of the framing being displayed. Other arrangements are also possible, as will be appreciated by those skilled in the art.

In accordance with another advantageous aspect, the displayed advertising indicia framing **40** may be selected based upon a geographic location of the mobile device **31.** For example, the location of the mobile device **31** may be determined based upon a satellite positioning device (e.g., Global Positioning System (GPS)) or other positioning device (which may or may not be in the same physical forum factor as the mobile device **31**), by triangulation from cellular network base stations, etc., as will be appreciated by those skilled in the art, at Block **66'.** Accordingly, the advertising indicia to be used may be selected based upon the proximity of the mobile device **31** to a given advertiser's place of business, such as a restaurant, store, etc. (Block **63').** That is, if the user is traveling toward a location of a sponsoring advertiser, then that advertiser's indicia may be used next, for example. Examples may include when the mobile device **31** is traveling down a road toward a sponsoring restaurant, moving through a mall toward a sponsoring store, etc.

A related computer-readable medium is also provided. The computer-readable medium may have computer-executable instructions or computer-executable modules for causing the mobile wireless communications device **31** to perform steps including displaying the plurality of selectable icons **40a-40f** on the display **36**, retrieving advertising data from the advertising server **35** via the wireless transceiver **32** and wireless communications network **34,** and indicating a selected one of the icons on the display based upon the user input device **37** by displaying advertising indicia framing **41** around the selected icon based upon the advertising data from the advertising server.

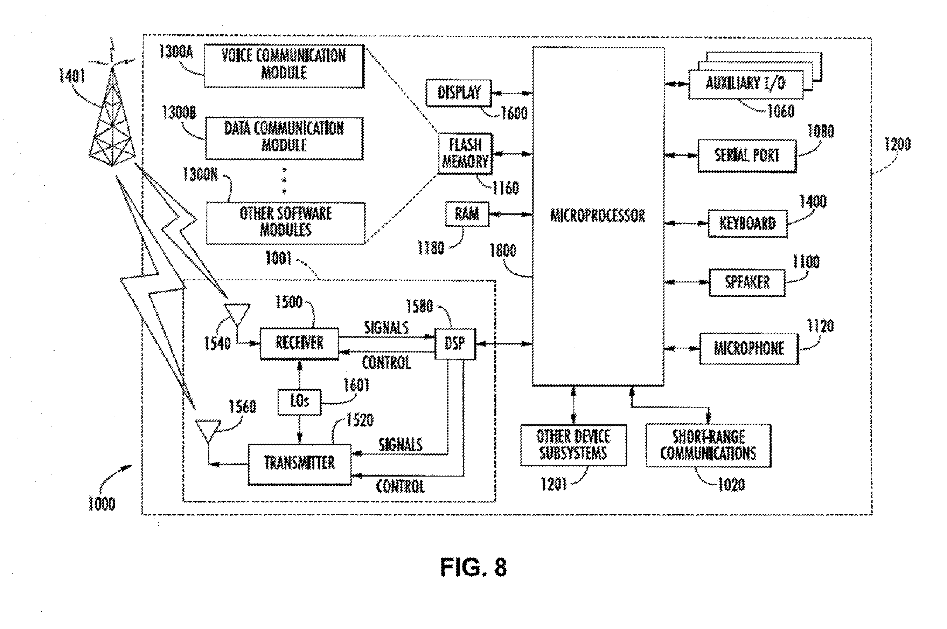

Exemplary components of a mobile wireless communications device **1000** that may be used in accordance with the system **30** are further described in the example below with reference to FIG. 8. The device **1000** illustratively includes a housing **1200,** a key pad **1400** and an output device **1600**. The output device shown is a display **1600**, which may comprise a full graphic LCD. In some embodiments, display **1600** may comprise a touch-sensitive input and output device. Other types of output devices may alternatively be utilized. A processing device **1800** is contained within the housing **1200** and is coupled between the key pad **1400** and the display **1600**. The processing device **1800** controls the operation of the display **1600,** as well as the overall operation of the mobile device **1000,** in response to actuation of keys on the key pad **1400** by the user. In some embodiments, key pad **1400** may comprise a physical key pad or a virtual key pad (e.g., using a touch-sensitive interface) or both.

The housing **1200** may be elongated vertically, or may take on other sizes and shapes (including clamshell housing structures). The key pad **1400** may include a mode selection key, or other hardware or software for switching between text entry and telephony entry.

In addition to the processing device **1800,** other parts of the mobile device **1000** are shown schematically in FIG. 8. These include a communications subsystem **1001;** a short-range communications subsystem **1020;** the key pad **1400** and the display **1600,** along with other input/output devices **1060, 1080, 1100** and **1120;** as well as memory devices **1160, 1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as so read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180**.

The processing device **1800**, in addition to its operating system functions, enables execution of software applications **1300A-1300N** on the device **1000**. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronised and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560**. In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications network, and also designed to operate with any of a variety of voice communications networks, such as AMPS, TDMA, CDMA, WCDMA, PCS, GSM, EDGE, etc. Other types of data and voice network, both separate and integrated,may also be utilized with the mobile device **1000**. The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the key pad **1400** and/or some other auxiliary I/O device **1060,** such as a touchpad, a rocker switch, a thumb-wheel, track ball, or some other type of input device. The composed data items may then be transmitted over the communications network **1401** via the communications subsystem **1001.**

In a voice communications mode, overall operation of the device is substantially similar to the data communications mode, except that received signals are output to a speaker **1100**, and signals for transmission are generated by a microphone **1120.**
Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A wireless communications system (30) comprising:
a notification server (35); and
at least one mobile wireless communications device (31) comprising
a display (36),
a wireless transceiver (32),
a user input device (37), and
a processor (38) configured to
render a plurality of selectable icons on said display,
retrieve notification data from said notification server via said wireless transceiver, and
indicate a selected one of the icons on said display based upon said user input device by displaying notification indicia framing around the selected icon based upon the notification data from said notification server.

2. The wireless communications system (30) of Claim 1 wherein the notification indicia framing surrounds the selected icon.

3. The wireless communications system (30) of Claim 1 wherein the notification indicia framing comprises notification text.

4. y The wireless communications system (30) of Claim 1 wherein said processor (38) is configured to change a position of the displayed notification indicia framing from surrounding one selected icon to surrounding an adjacent selected icon based on user input from the user input device (37).

5. The wireless communications system (30) of Claim 4 wherein the displayed notification indicia framing is different for different icons.

6. The wireless communications system (30) of Claim 1 wherein the displayed notification indicia framing is selected based upon a geographic location of said mobile wireless communications device (31).

7. The wireless communications system (30) of Claim 1 wherein said processor (38) is also for displaying at least one additional icon on said display (36) for which notification indicia framing is not displayed upon selection.

8. The wireless communications system (30) of Claim 1 wherein said notification server (35) comprises an advertising server, and wherein the notifications comprise advertisements.

9. The wireless communications system (30) of Claim 8 wherein said advertising server provides the advertising data based upon advertiser bidding.

10. The wireless communications system (30) of Claim 1 wherein said wireless transceiver (32) comprises a cellular transceiver.

11. A mobile wireless communications method for use with a notification server (35) and at least one mobile wireless communications device (31) comprising a display (36), a wireless transceiver (32), and a user input device (37), the method comprising:
rendering a plurality of selectable icons on the display;
retrieving notification data from the notification server via the wireless transceiver; and
indicating a selected one of the icons on the display based upon the user input device by displaying notification indicia framing around the selected icon based upon the notification data from the notification server.

12. The method of Claim 11 wherein the notification indicia framing surrounds the selected icon.

13. The method of Claim 11 wherein the notification indicia framing comprises notification text.

14. The method of Claim 11 wherein indicating further comprises changing a position of the displayed notification indicia framing from surrounding one selected icon to surrounding an adjacent selected icon based on user input from the user input device (37).

15. The method of Claim 14 wherein the displayed notification indicia, framing is different for different icons.
